# EUROPEAN PATENT APPLICATION

(11) **EP 0 680 912 A2**
(43) Date of publication of application: **08.11.1995**
(21) Application number: 95106576.2
(22) Date of filing: 02.05.1995
(51) Int. Cl.: B65H 20/02

(54) **Method of and apparatus for feeding scanned medium**

(30) Priority: 02.05.1994 JP 93354/94; 19.08.1994 JP 195552/94
(71) Applicant: FUJI PHOTO FILM CO., LTD., Kanagawa-ken, 250-01 (JP)
(72) Inventor: Kawamura, Yoshinori, c/o Fuji Photo Film Co., Ltd., Ashigarakami-gun, Kanagawa-ken 258 (JP)
(74) Representative: Grünecker, Kinkeldey, Stockmair & Schwanhäusser Anwaltssozietät

(57) **Abstract**

An apparatus (10) for feeding a photosensitive medium (12) has a rotary drum (14) rotatable about its own axis and a pair of transversely spaced nip rollers (16, 18) disposed below and movable toward and away from the rotary drum (14), for gripping and feeding the photosensitive medium (12) in coaction with the rotary drum (14). The nip roller (16, 18) comprises a plurality of roller elements (46a ∼ 46e) individually rotatably mounted on a shaft (34) and spaced in an axial direction of the rotary drum (14). The roller elements (46a ∼ 46e) include roller elements (46a, 46b, 46d, 46e) positioned respectively at axially opposite ends of the nip rollers and having a diameter smaller than one (46c) of the roller elements which is positioned at a center of the nip roller (16, 18). With this arrangement, no undesirable gap is created between the lower outer circumferential surface of the rotary drum (14) and the outer circumferential surfaces of the roller elements (46a ∼ 46e) of the nip rollers (16, 18).

## Description

### BACKGROUND OF THE INVENTION

### Field of the Invention:

The present invention relates to a method of and an apparatus for feeding a scanned medium by gripping the scanned medium between a rotary drum and nip rollers. Description of the Related Art:

There have widely been used recording apparatus for recording image information on a scanned medium and reading apparatus for photoelectrically reading image information recorded on a scanned medium. In such recording and reading apparatus, a light beam emitted from a light beam generator is caused by a light beam deflector and a scanning lens to scan a scanned medium in a main scanning direction, and the scanned medium is simultaneously fed in an auxiliary scanning direction by a feeding mechanism for thereby recording image information on the scanned medium or photoelectrically reading image information recorded on the scanned medium.

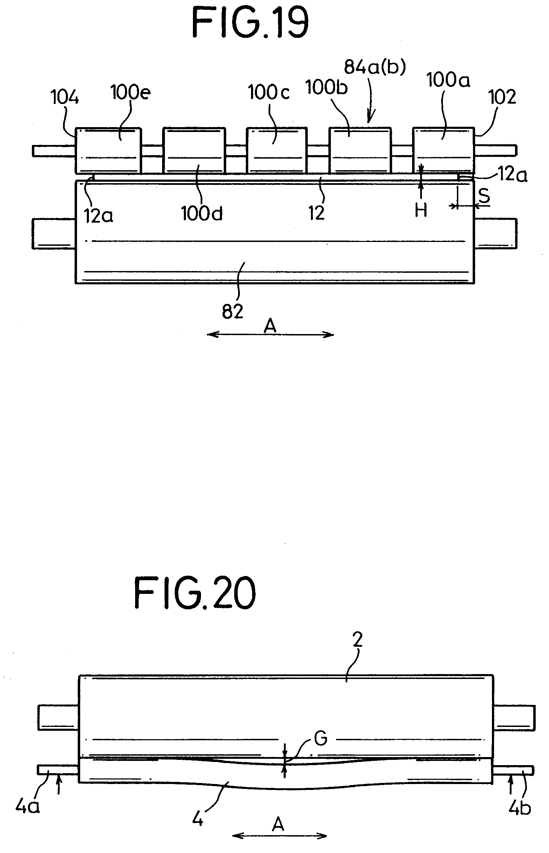

Generally, one known feeding mechanism for feeding a scanned medium in an auxiliary scanning direction comprises, as shown in FIG. 20 of the accompanying drawings, a rotary drum 2 rotatable about its own axis and at least one nip roller 4 disposed below and movable toward and away from the rotary drum 2. The rotary drum 2 and the nip roller 4 grip a scanned medium therebetween and feed the scanned medium in an auxiliary scanning direction when the rotary drum 2 is rotated.

Since the nip roller 4 is positioned underneath the rotary drum 2, the nip roller 4 is liable to be deformed due to gravity. The nip roller 4 has opposite axial ends 4a, 4b which are normally biased by springs to keep the nip roller 4 in contact with the rotary drum 2. The biasing forces applied to the opposite axial ends 4a, 4b of the nip roller 4 tend to cause a central region of the nip roller 4 to flex downwardly away from the rotary drum 2, creating a gap G between central regions of the rotary drum 2 and the nip roller 4. Because of the gap G present between the rotary drum 2 and the nip roller 4, the rotary drum 2 and the nip roller 4 fail to grip the scanned medium uniformly in the axial direction (indicated by the arrow A) of the rotary drum 2. Consequently, the scanned medium may be fed at irregular speeds by the rotary drum 2 and the nip roller 4. Another problem is that since the scanned medium may be lifted off the rotary drum 2 in the presence of the gap G, scanning lines formed on the scanned medium are liable to be unduly curved, so that the scanned medium cannot be scanned highly accurately by the light beam.

One solution is to use, as a nip roller, a crown roller including a central region whose diameter is greater than the diameter of the opposite ends of the roller. However, if the crown roller has a deformed portion, then the feed rate of the crown roller varies, making it impossible to fed the scanned medium accurately. Because it is necessary to manufacture the crown roller in precise dimensions, the process of manufacturing the crown roller is complex and time-consuming, and its cost is high.

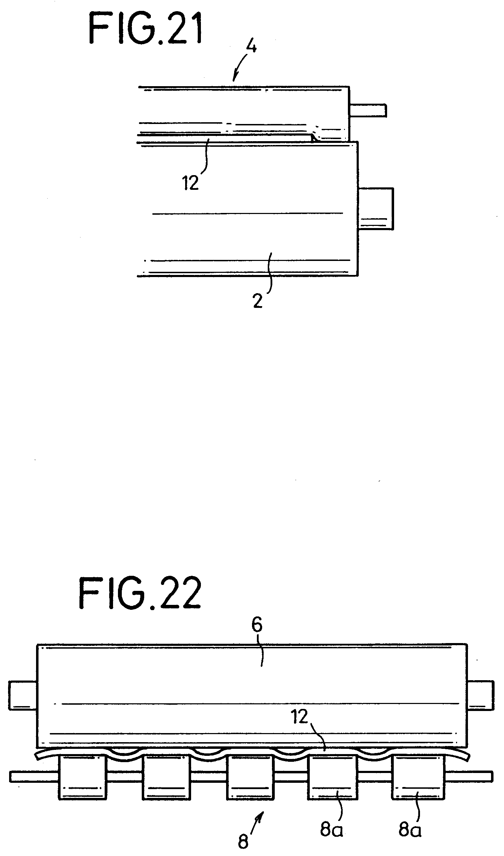

FIG. 21 of the accompanying drawings shows another conventional feeding mechanism for feeding a scanned medium in an auxiliary scanning direction. The feeding mechanism shown in FIG. 21 comprises a rotary drum 2 rotatable about its own axis and at least one nip roller 4 disposed above and movable toward and away from the rotary drum 2. The rotary drum 2 and the nip roller 4 grip a film 12 (scanned medium) therebetween and feed the film 12 in an auxiliary scanning direction when the rotary drum 2 is rotated.

With the feeding mechanism shown in FIG. 21, if an axial end of the nip roller 4 projects largely outwardly beyond an edge of the film 12, then the film 12 suffers localized feed rate variations. Specifically, if the nip roller 4 is made of an elastic material, then the nip roller 4 has different portions that are simultaneously held in contact with the film 12 and the rotary drum 2, i.e., as shown in FIG. 21, a portion of the nip roller 4 is held in contact with the film 12, and an axially end portion of the nip roller 4 is also held in contact with the rotary drum 2. Consequently, the nip roller 4 has different diameters, i.e., a larger diameter at the axially end portion and a smaller diameter at the axially inner portion. The edge of the film 12 which is positioned at the larger-diameter axially end portion of the nip roller 4 is fed at a higher rate, and the central area of the film 12 which is positioned at the smaller-diameter axially inner portion of the nip roller 4 is fed at a lower rate. Inasmuch as the film 12 thus fed by the feeding mechanism shown in FIG. 21 travels along a curved path, no accurate image information can be recorded on or read from the film 12.

Still another known feeding mechanism shown in FIG. 22 of the accompanying drawings comprises a rotary drum 6 rotatable about its own axis and at least one divided nip roller 8 disposed below and movable toward and away from the rotary drum 6. The feeding mechanism shown in FIG. 22 suffers the same problem as with the feeding mechanism shown in FIG. 21. In addition, if an edge of a film 12 projects largely outwardly from an axial end of the divided nip roller 8, then the projecting edge of the film 12 tends to droop due to gravity. When the projecting edge of the film 12 droops, it causes a light beam to scan the film edge along curved or distorted scanning lines, and hence the film edge cannot be scanned highly accurately by the scanning light beam.

Furthermore, if the divided nip roller 8 is composed of widely spaced roller elements 8a as shown in FIG. 22, then the film 12 is likely to flex downwardly due to gravity between the roller elements 8a. When the film 12 has flexing portions between the roller elements 8a, it cannot be scanned highly accurately by the scanning light beam.

### SUMMARY OF THE INVENTION

It is therefore an object of the present invention to provide a method of and an apparatus for feeding a scanned medium while preventing the scanned medium from traveling along a curved path or flexing, thereby to allow the scanned medium to be scanned highly accurately by a scanning beam.

To accomplish the above object, there is provided in accordance with the present invention an apparatus for feeding a scanned medium, comprising a rotary drum rotatable about its own axis, the rotary drum being capable of disposing the scanned medium at a precise position where the scanned medium is to be scanned, and a nip roller disposed below and movable toward and away from the rotary drum, for gripping and feeding the scanned medium in coaction with the rotary drum, the nip roller comprising a plurality of individually rotatable roller elements spaced in an axial direction of the rotary drum, the roller elements including roller elements positioned respectively at axially opposite ends of the nip roller and having a diameter smaller than that of one of the roller elements which is positioned at a center of the nip roller.

In the above feeding apparatus, the diameter of the roller elements positioned respectively at the axially opposite ends of the nip roller is smaller than that of one of the roller elements which is positioned at the center of the nip roller. When the central region of the nip roller flexes downwardly due to gravity or under the bias of springs, the roller elements have respective outer circumferential surfaces lined up parallel to a lower outer circumferential surface of the rotary drum. Therefore, the flexing of the nip roller is taken up by the difference between the diameters of the roller elements, for thereby preventing a gap from being created between the nip roller and the rotary drum. The scanned medium is thus gripped uniformly in the axial direction of the rotary drum, and prevented from being lifted off the rotary drum or suffering different feed rates.

According to the present invention, there is also provided an apparatus for feeding a scanned medium, comprising a rotary drum rotatable about its own axis, the rotary drum being capable of disposing the scanned medium at a precise position where the scanned medium is to be scanned, and a nip roller disposed below and movable toward and away from the rotary drum, for gripping and feeding the scanned medium in coaction with the rotary drum, the nip roller comprising a bracket movable toward and away from the rotary drum, a plurality of shafts resiliently supported on the bracket and spaced in an axial direction of the rotary drum, and a plurality of roller elements individually rotatably mounted on the shafts, respectively.

In the above feeding apparatus, the roller elements of the nip roller are individually rotatably mounted on the shafts, respectively, which are resiliently supported on the bracket and spaced in the axial direction of the rotary drum. Consequently, the roller elements have respective small axial lengths and are lightweight, and the roller elements are subject to only a small amount of flexing. The roller elements can reliably be held in rolling contact with the outer circumferential surface of the rotary drum, for thereby pressing the scanned medium against the outer circumferential surface of the rotary drum uniformly in the axial direction of the rotary drum. The feeding apparatus can thus feed the scanned medium highly accurately.

According to the present invention, there is further provided an apparatus for feeding a scanned medium, comprising a rotary drum rotatable about its own axis, the rotary drum being capable of disposing the scanned medium at a precise position where the scanned medium is to be scanned, and a nip roller disposed below and movable toward and away from the rotary drum, for gripping and feeding the scanned medium in coaction with the rotary drum, the nip roller comprising a plurality of individually rotatable roller elements spaced in an axial direction of the rotary drum by a distance of at most 100 mm if the scanned medium has a thickness ranging from 75 to 150 µm.

In the above feeding apparatus, the nip roller disposed below the rotary drum is composed of individually rotatable roller elements spaced in the axial direction of the rotary drum by 100 mm or less if the thickness of the scanned medium is in the range of from 75 to 150 µm. As a result, the scanned medium is prevented from flexing to a large extent between the roller elements, and can be scanned highly accurately by a scanning light beam.

According to the present invention, there is also provided a method of feeding a scanned medium having a thickness ranging from 75 to 150 µm by gripping the scanned medium with a rotary drum rotatable about its own axis, the rotary drum being capable of disposing the scanned medium at a precise position where the scanned medium is to be scanned, and a nip roller movable toward and away from the rotary drum, the method comprising the steps of positioning an edge of the scanned medium which extends across the direction in which the scanned medium is fed, within a range of at most 5 mm axially inwardly from an end of the nip roller to keep the end of the nip roller spaced from the rotary drum, and feeding the scanned medium while the end of the nip roller is being spaced from the rotary drum.

In the above feeding method, because the edge of the scanned medium is positioned within a range of at most 5 mm axially inwardly from the end of the nip roller if the thickness of the scanned medium ranges from 75 to 150 µm, the end of the nip roller is held out of direct contact with the rotary drum. Therefore, the scanned medium is prevented from suffering large local feed rate variations, and can thus be fed highly accurately.

According to the present invention, there is further provided a method of feeding a scanned medium having a thickness ranging from 75 to 150 µm by gripping the scanned medium with a rotary drum rotatable about its own axis, the rotary drum being capable of disposing the scanned medium at a precise position where the scanned medium is to be scanned, and a nip roller disposed below and movable toward and away from the rotary drum, the method comprising the steps of positioning an edge of the scanned medium which extends across the direction in which the scanned medium is fed, within a range of at most 40 mm axially outwardly from an end of the nip roller to limit downward flexing of the edge of the scanned medium, and feeding the scanned medium while downward flexing of the edge of the scanned medium is being limited.

In the above feeding method, the edge of the scanned medium is positioned within a range of at most 40 mm axially outwardly from the end of the nip roller if the thickness of the scanned medium ranges from 75 to 150 µm. Consequently, the amount of downward flexing of the edge of the scanned medium is limited, preventing a scanning light beam from scanning the scanned medium along curved or distorted scanning lines.

The above and other objects, features, and advantages of the present invention will become apparent from the following description when taken in conjunction with the accompanying drawings which illustrate preferred embodiments of the present invention by way of example.

### BRIEF DESCRIPTION OF THE DRAWINGS

FIG. 1 is a side elevational view of a feeding apparatus according to a first embodiment of the present invention;
FIG. 2 is a front elevational view of a rotary drum and a nip roller of the feeding apparatus according to the first embodiment;
FIG. 3 is a side elevational view showing the feeding apparatus according to the first embodiment at the time brackets thereof are turned;
FIG. 4 is a fragmentary front elevational view, partly in cross section, of a feeding apparatus according to a second embodiment of the present invention;
FIG. 5 is a front elevational view of a rotary drum and a nip roller, the view being illustrative of a feeding method according to a third embodiment of the present invention;
FIG. 6 is a view of an image that is recorded when a distance S is 0 mm in the feeding method according to the third embodiment;
FIG. 7 is a view of an image that is recorded when the distance S is 5 mm in the feeding method according to the third embodiment;
FIG. 8 is a view of an image that is recorded when the distance S is 40 mm in the feeding method according to the third embodiment;
FIG. 9 is a view of an image that is recorded when the distance S is 60 mm in the feeding method according to the third embodiment;
FIG. 10 is a front elevational view of a rotary drum and a nip roller, the view being illustrative of a feeding method according to a fourth embodiment of the present invention;
FIG. 11 is a view of an image that is recorded when a distance S₁ is 40 mm in the feeding method according to the fourth embodiment;
FIG. 12 is a view of an image that is recorded when the distance S₁ is 80 mm in the feeding method according to the fourth embodiment;
FIG. 13 is a view of an image that is recorded when the distance S₁ is 120 mm in the feeding method according to the fourth embodiment;
FIG. 14 is a front elevational view of a rotary drum and a nip roller of a feeding apparatus according to a fifth embodiment of the present invention;
FIG. 15 is a fragmentary elevational view showing how a film flexes when a distance Y is 100 mm in the feeding apparatus according to the fifth embodiment;
FIG. 16 is a fragmentary elevational view showing how a film flexes when the distance Y is 150 mm in the feeding apparatus according to the fifth embodiment;
FIG. 17 is a fragmentary elevational view showing how a film flexes when the distance Y is 200 mm in the feeding apparatus according to the fifth embodiment;
FIG. 18 is a side elevational view of a feeding apparatus according to a sixth embodiment of the present invention;
FIG. 19 is a front elevational view of a rotary drum and a nip roller of the feeding apparatus according to the sixth embodiment;
FIG. 20 is a front elevational view of a conventional feeding mechanism;
FIG. 21 is a fragmentary front elevational view of another conventional feeding mechanism; and
FIG. 22 is a fragmentary front elevational view of still another conventional feeding mechanism.

### DESCRIPTION OF THE PREFERRED EMBODIMENTS

### 1st Embodiment:

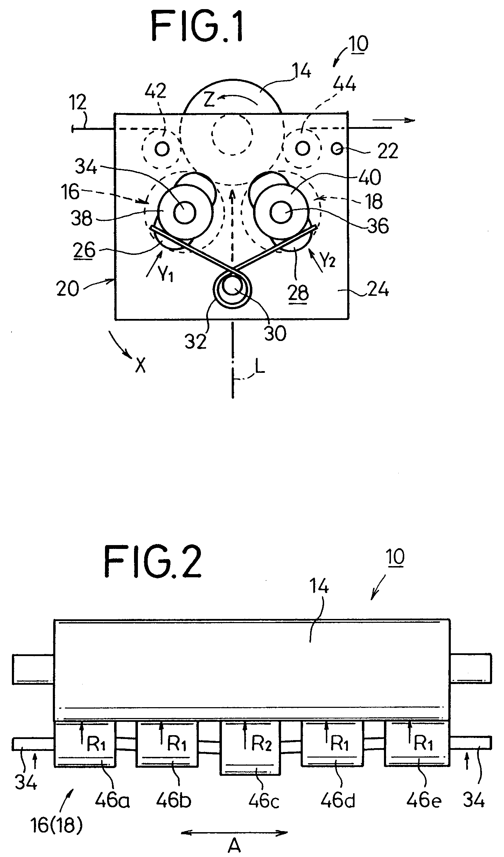

As shown in FIG. 1, a feeding apparatus 10 according to a first embodiment of the present invention comprises a rotary drum 14 rotatable about its own axis for feeding a photosensitive medium (scanned medium) 12 to be scanned, and a pair of transversely spaced nip rollers 16, 18 disposed below and movable toward and away from the rotary drum 14. The rotary drum 14 has itself sufficient preciseness in positioning the photosensitive medium 12 when the nip rollers 16, 18 are properly arranged. The rotary drum 14 and the nip rollers 16, 18, which have their axes lying parallel to each other, grip and feed the photosensitive medium 12 in an auxiliary scanning direction perpendicularly to the axes of the rotary drum 14 and the nip rollers 16, 18.

The nip rollers 16, 18 are positioned below and movable toward and away from the rotary drum 14 by a displacing means 20. The displacing means 20 comprises a pair of brackets 24 positioned respectively at the opposite ends of the nip rollers 16, 18 and angularly movable counterclockwise in the direction indicated by the arrow X about respective pivot pins 22. Each of the brackets 24 has a pair of slots 26, 28 defined therein and having respective longitudinal axes inclined toward the axis of the rotary drum 14. A pin 30 is fixed to the bracket 24 at an intermediate position between and equidistant from the slots 26, 28. A torsion coil spring 32 coiled around the pin 30 has opposite ends engaging respective bearings 38, 40 that are mounted on respective ends of shafts 34, 36 of the respective nip rollers 16, 18. The nip rollers 16, 18 are normally biased to move along the slots 26, 28 in the respective directions indicated by the arrows Y₁, Y₂ under the resiliency of the torsion coil spring 32, so that the nip rollers 16, 18 are held against the rotary drum 14 when the brackets 24 are in the position shown in FIG. 1.

Guide rollers 42, 44 are rotatably mounted on each of the brackets 24 closely to the respective slots 26, 28 remotely from the pin 30. The guide rollers 42, 44 serve to be held in rolling contact with the photosensitive medium 12 on an outer circumferential surface of the rotary drum 14 for guiding the photosensitive medium 12 along the curvature of the outer circumferential surface of the rotary drum 14. The guide rollers 42, 44 are preferably movable toward and away from the rotary drum 14 under the bias of springs (not shown).

As shown in FIG. 2, the nip roller 16 comprises a plurality of roller elements 46a ∼ 46e individually rotatably mounted on the shaft 34 by respective bearings (not shown), the roller elements 46a ∼ 46e being axially spaced in the direction indicated by the arrow A. The roller elements 46a, 46b, 46d, 46e which are close to the opposite ends of the nip rollers 16 have a radius R₁ that is smaller than the radius R₂ of the roller element 46c which is positioned axially centrally on the shaft 34. The difference between the radii R₁, R₂ is substantially the same as the gap G shown in FIG. 20. Therefore, the central roller element 46c can take up the distance by which the central region of the nip roller 16 flexes downwardly due to gravity.

The nip roller 18 is identical in structure to the nip roller 16, and hence will not be described in detail below.

A light beam generator (not shown) is positioned below the rotary drum 14 for emitting a light beam L (see FIG. 1) that is applied to a lower surface of the rotary drum 14 through a space defined between the nip rollers 16, 18.

Operation of the feeding apparatus 10 will be described below.

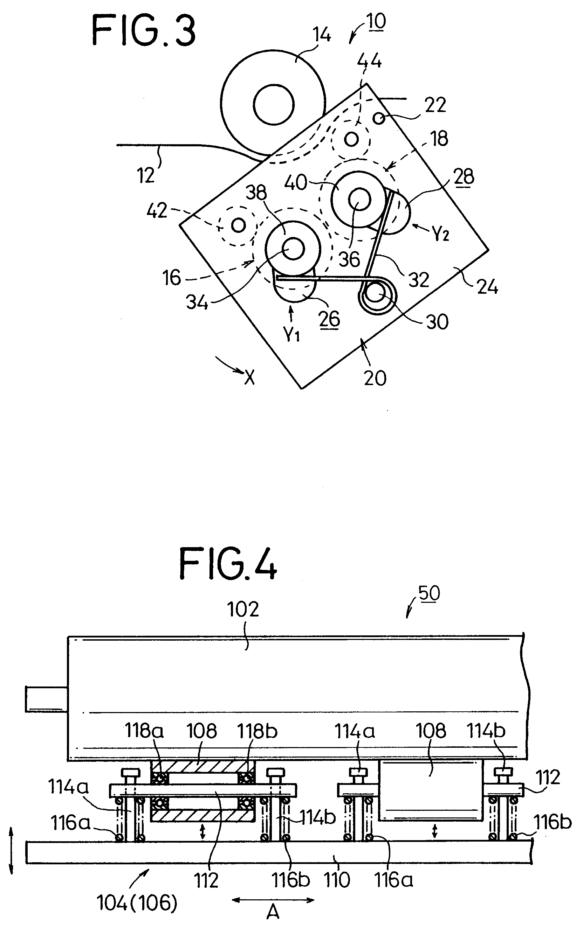

As shown in FIG. 3, when each of the brackets 24 is turned counterclockwise in the direction indicated by the arrow X about the pivot pin 22, since the nip rollers 16, 18 are normally biased to move along the slots 26, 28 in the respective directions indicated by the arrows Y₁, Y₂ under the resiliency of the torsion coil spring 32, the nip rollers 16, 18 move along the slots 26, 28 relatively toward the rotary drum 14 until the nip rollers 16, 18 are brought into contact with each other. Now, a space or passage for inserting the photosensitive medium 12 therein is created between the rotary drum 14 and the nip rollers 16, 18, as shown in FIG. 3.

After the photosensitive medium 12 has been inserted in the passage the rotary drum 14 and the nip rollers 16, 18, the brackets 24 are turned back clockwise in the direction opposite to the direction X. The photosensitive medium 12 is wound on the outer circumferential surface of the rotary drum 14 through a certain angular interval by the guide rollers 42, 44, and gripped between the rotary drum 14 and the nip rollers 16, 18.

The rotary drum 14 is now rotated counterclockwise in the direction indicated by the arrow Z (see FIG. 1) by an actuator (not shown), thereby feeding the photosensitive medium 12 in the auxiliary scanning direction while being gripped between the rotary drum 14 and the nip rollers 16, 18. At the same time, the light beam generator is energized to apply the light beam L, which has been modulated by image information and deflected in a main scanning direction normal to the auxiliary scanning direction, to the lower surface of the rotary drum 14 through the space between the nip rollers 16, 18. The image information is two-dimensionally recorded on the photosensitive medium 12 by the scanning light beam L.

As shown in FIG. 2, the nip rollers 16, 18 are disposed below and movable toward and away from the rotary drum 14, and have their opposite ends pushed substantially upwardly by the torsion coil spring 32. Therefore, the nip rollers 16, 18 tend to flex at their central regions due to gravity and the bias of the torsion coil spring 32.

According to the first embodiment, as described above, the radius R₁ of the roller elements 46a, 46b, 46d, 46e at the opposite ends of the nip rollers 16, 18 is smaller than the radius R₂ of the roller element 46c at the center of the nip rollers 16, 18. Because the radius R₂ (> R₁) of the roller element 46c is selected to take up the distance by which the central regions of the nip rollers 16, 18 flex downwardly, the roller elements 46a ∼ 46e have respective outer circumferential surfaces lined up parallel to the lower outer circumferential surface of the rotary drum 14.

With this arrangement, no undesirable gap is created between the lower outer circumferential surface of the rotary drum 14 and the outer circumferential surfaces of the roller elements 46a ∼ 46e of the nip rollers 16, 18. Therefore, the photosensitive medium 12 can be gripped uniformly in the axial direction (indicated by the arrow A) of the rotary drum 14 between the rotary drum 14 and the nip rollers 16, 18. The photosensitive medium 12 thus gripped is prevented from being lifted off the lower outer circumferential surface of the rotary drum 14, and also from being fed at different rates in the auxiliary scanning direction. As a consequence, it is possible to record high-quality images on the photosensitive medium 12.

The above advantages can be achieved simply by appropriately selecting the radius R₁ of the roller elements 46a, 46b, 46d, 46e and the radius R₂ of the roller element 46c. The cost of the feeding apparatus 10 is not substantially increased, and the photosensitive medium 12 can be fed efficiently and highly accurately by a relatively simple and inexpensive arrangement.

While the brackets 24 are angularly movable about the respective pivot pins 22 in the first embodiment, the brackets 24 may be linearly movable toward and away from the rotary drum 14. The nip rollers 16, 18 may be movable parallel to each other toward and away from the rotary drum 14, rather than movable along the inclined slots 26, 28 toward and away from the axis of the rotary drum 14.

### 2nd Embodiment:

FIG. 4 shows a feeding apparatus 50 according to a second embodiment of the present invention. The feeding apparatus 50 comprises a rotary drum 102 rotatable about its own axis, and a pair of transversely spaced nip rollers 104, 106 disposed below and movable toward and away from the rotary drum 102. Since the nip rollers 104, 106 are identical in structure to each other, only the nip roller 104 will be described below.

The nip roller 104 comprises a plurality of individually rotatable roller elements 108 that are axially spaced in the direction indicated by the arrow A. The roller elements 108 are rotatably mounted on respective shafts 112 which are resiliently supported on a bracket 110 movable toward and away from the rotary drum 102 and positioned at spaced intervals along the axial direction of the rotary drum 102.

A plurality of pairs of setscrews 114a, 114b are threaded into the bracket 110 at spaced intervals along the axial direction of the rotary drum 102. Each of the shafts 112 is supported on one pair of setscrews 114a, 114b by respective compression springs 116a, 116b for movement along the setscrews 114a, 114b toward and away from the rotary drum 102. Each of the roller elements 108 is rotatably mounted on one of the shafts 112 by bearings 118a, 118b.

In the feeding apparatus 50, since the roller elements 108 have respective small axial lengths and are lightweight, the roller elements 108 are subject to only a small amount of flexing. The roller elements 108 are individually rotatable and movable toward and away from the bracket 110 through the compression springs 116a, 116b. Consequently, the roller elements 108 can reliably be held in rolling contact with the outer circumferential surface of the rotary drum 102 at spaced intervals along the axis thereof, for thereby pressing the photosensitive medium 12 against the outer circumferential surface of the rotary drum 102 uniformly in the axial direction of the rotary drum 102. The feeding apparatus 50 according to the second embodiment thus offers the same advantages as with the feeding apparatus 10 according to the first embodiment.

In the first and second embodiments, the photosensitive medium 12 is fed in the auxiliary direction for recording image information on the photosensitive medium 12. However, the principles of the first and second embodiments may also be applied to an apparatus for feeding a photosensitive medium in an auxiliary scanning direction to photoelectrically read recorded image information from the photosensitive medium with a light beam applied to the photosensitive medium.

### 3rd Embodiment:

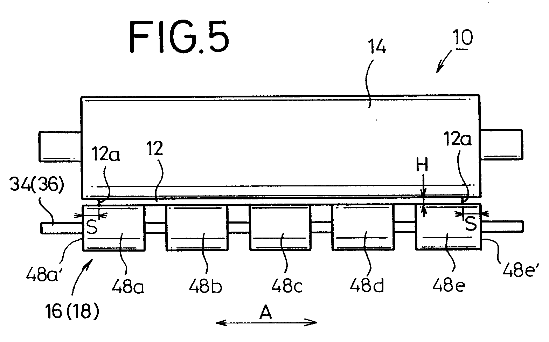

FIG. 5 shows a feeding apparatus 10 according to a third embodiment of the present invention. The feeding apparatus 10 shown in FIG. 5 comprises a rotary drum 14 rotatable about its own axis, and a pair of transversely spaced nip rollers 16, 18 comprising a plurality of roller elements 48a ∼ 48e individually rotatably mounted on shafts 34, 36 by respective bearings (not shown), the roller elements 46a ∼ 46e being axially spaced in the direction indicated by the arrow A. The roller elements 48a, 48e positioned on the opposite ends of the nip rollers 16, 18 have axial ends 48a', 48e', respectively, that project, by a distance S, outwardly beyond longitudinal edges 12a of a photosensitive medium 12 which extend perpendicularly to the direction A. The distance S is set to 5 mm at maximum if the photosensitive medium 12 has a thickness H ranging from 75 to 150 µm.

A light beam generator (not shown) is positioned below the rotary drum 14 for emitting a light beam L (see FIG. 1) that is applied to a lower surface of the rotary drum 14 through a space defined between the nip rollers 16, 18.

Operation of the feeding apparatus 10 shown in FIG. 5 will be described below with respect to the feeding method that has been described above in relation to the feeding apparatus according to the first embodiment.

When the brackets 24 are turned counterclockwise in the direction indicated by the arrow X about the pivot pin 22, as shown in FIG. 3, the nip rollers 16, 18 and the guide rollers 42, 44 are spaced from the rotary drum 14. After the photosensitive medium 12 has been inserted between the rotary drum 14 and the nip rollers 16, 18, the brackets 24 are turned back clockwise in the direction opposite to the direction A. The photosensitive medium 12 is wound on the outer circumferential surface of the rotary drum 14 through a certain angular interval by the guide rollers 42, 44, and gripped between the rotary drum 14 and the nip rollers 16, 18.

The rotary drum 14 is now rotated counterclockwise in the direction indicated by the arrow Z (see FIG. 1) by an actuator (not shown), thereby feeding the photosensitive medium 12 in the auxiliary scanning direction while being gripped between the rotary drum 14 and the nip rollers 16, 18. At the same time, the light beam generator is energized to apply the light beam L, which has been modulated by image information and deflected in a main scanning direction normal to the auxiliary scanning direction, to the lower surface of the rotary drum 14 through the space between the nip rollers 16, 18. The image information is two-dimensionally recorded on the photosensitive medium 12 by the scanning light beam L.

According to the third embodiment, as shown in FIG. 5, each of the nip rollers 16, 18 has a plurality of roller elements 48a ∼ 48e, and the longitudinal edges 12a of the photosensitive medium 12 are spaced 5 mm or less axially inwardly from the axial ends 48a', 48e' of the roller elements 48a, 48e if the thickness H of the photosensitive medium 12 ranges from 75 to 150 µm. Therefore, the axial ends 48a', 48e' of the roller elements 48a, 48e do not directly contact the rotary drum 14. With this arrangement, any variations in the feed rate of the photosensitive medium 12 at its central and edge regions fall within a tolerable range, making it possible to feed the photosensitive medium 12 highly accurately.

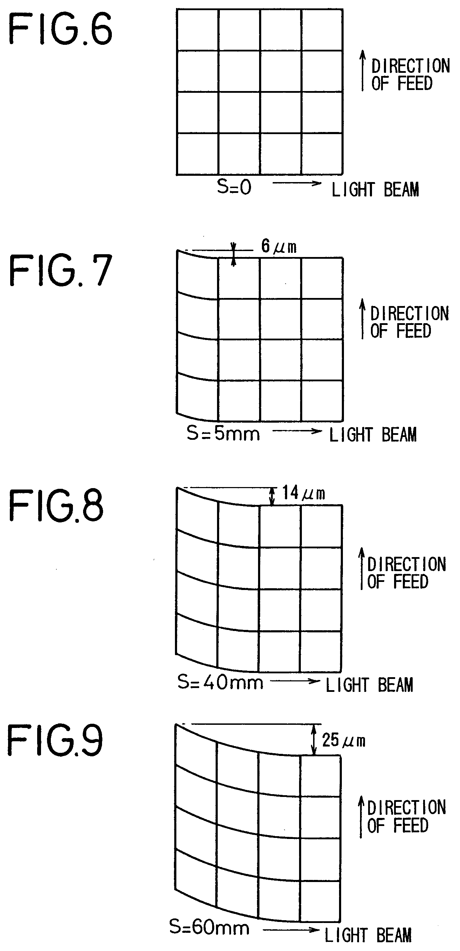

The above numerical limitation of 5 mm or less has been obtained as a consequence of experiments that were conducted to detect any errors in recorded images when a photographic platemaking film having a thickness H ranging from 75 to 150 µm was used as the photosensitive medium 12 and the distance S was varied at the left edge of the photosensitive medium 12 as viewed in the direction in which the photosensitive medium 12 was fed. Specifically, in the experiments, nipping forces in the range of from 1 to 1.5 kg were applied to the opposite ends of the nip roller 16 or nipping forces in the range of from 0.1 to 0.2 kg were applied to the opposite ends of the roller elements 48a ∼ 48e, the distance S was set to 0 mm, 5 mm, 40 mm, and 60 mm, and a reference image of a square pattern was recorded on photographic platemaking films. The results of the experiments are shown in FIGS. 6 through 9.

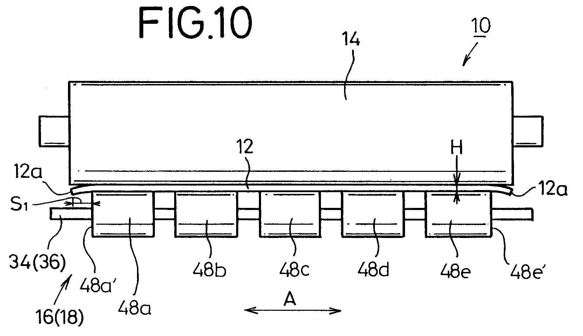

When the distance S was set to 0 mm, the recorded image was not distorted as shown in FIG. 6. Any distortion of the recorded images was increased as the distance S was increased. Specifically, the recorded image suffered a distortion of 6 µm with the distance S = 5 mm as shown in FIG. 7, a distortion of 14 µm with the distance S = 40 mm as shown in FIG. 8, and a distortion of 25 µm with the distance S = 60 mm as shown in FIG. 9. It was found, therefore, that the edge of the film was deformed to a larger extent in the direction in which the film was fed as the distance S increased.

The edge of the film was deformed in the direction in which it was fed because the diameter of the portion of the roller element positioned outwardly of the edge of the film increased, causing the film edge to be fed at a higher rate than the central region of the film. The recorded reference image of a square pattern was deformed at the film edge in the direction in which the film was fed. The tolerable range of distortions has a maximum value of 6 µm which does not affect recorded images, and hence the distance S is set to 5 mm or less.

Therefore, if the thickness H of the photosensitive medium 12 ranges from 75 to 150 µm, then the longitudinal edges 12a of the photosensitive medium 12 are spaced 5 mm or less axially inwardly from the axial ends 48a', 48e' of the roller elements 48a, 48e, so that any distortions of recorded images fall within the tolerable range, and hence images can be recorded highly accurately.

### 4th Embodiment:

A feeding method according to a fourth embodiment of the present invention will be described below with reference to FIGS. 10 through 13. The feeding method according to the fourth embodiment is carried out by the feeding apparatus according to the first through third embodiments. As shown in FIG. 10, furthermore, the photosensitive medium 12 has longitudinal edges 12a that project a distance S₁ outwardly beyond the axial ends 48a', 48e' of the roller elements 48a, 48e at the opposite ends of the nip rollers 16, 18. The distance S₁ is set to 40 mm at maximum if the photosensitive medium 12 has a thickness H ranging from 75 to 150 µm.

According to the fourth embodiment, if the thickness H of the photosensitive medium 12 ranges from 75 to 150 µm, then the longitudinal edges 12a of the photosensitive medium 12 are spaced 40 mm or less axially outwardly from the axial ends 48a', 48e' of the roller elements 48a, 48e. The longitudinal edges 12a of the photosensitive medium 12 are prevented from unduly flexing downwardly due to gravity while the photosensitive medium 12 is being fed in the auxiliary scanning direction by the rotary drum 14 and the nip rollers 16, 18. Therefore, the light beam L is prevented from scanning the film edges along curved or distorted scanning lines.

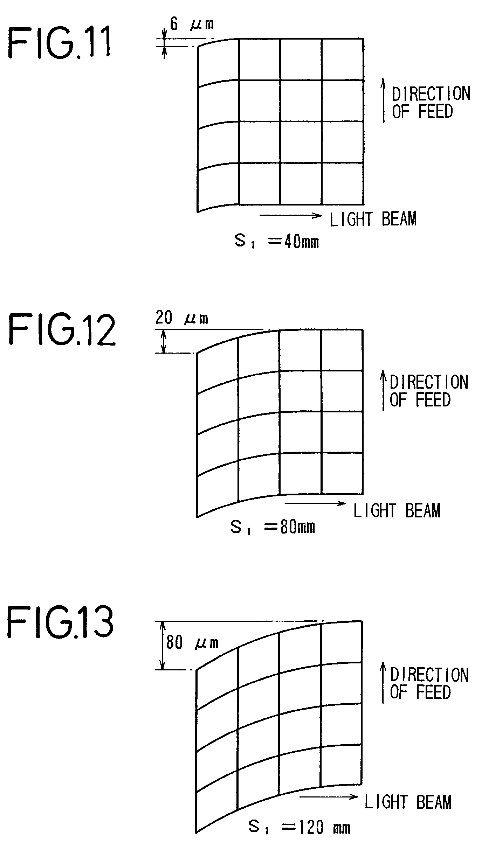

The above numerical limitation of 40 mm or less has been obtained as a consequence of experiments that were conducted to detect any errors in recorded images when a photographic platemaking film having a thickness H ranging from 75 to 150 µm was used as the photosensitive medium 12 and the distance S was varied at the left edge of the photosensitive medium 12 as viewed in the direction in which the photosensitive medium 12 was fed. The results of the experiments are shown in FIGS. 11 through 13.

When the distance S, was set to 40 mm, the recorded image was suffered a distortion of 6 µm as shown in FIG. 11. When the distance S₁ was set to 80 mm, the recorded image was suffered a distortion of 20 µm as shown in FIG. 12. When the distance S₁ was set to 120 mm, the recorded image was suffered a distortion of 80 µm as shown in FIG. 13. It was found, therefore, that the edge of the film was deformed to a larger extent in the direction opposite to the direction in which the film was fed as the distance S₁ increased.

The edge of the film was deformed in the direction opposite to the direction in which the film was fed because the film edge positioned outwardly of the nip roller drooped due to gravity and tended to lag behind the central region of the film since no positive forces were applied to the film edge. The tolerable range of distortions has a maximum value of 6 µm which does not affect recorded images, and hence the distance S₁ is set to 40 mm or less.

Therefore, if the thickness H of the photosensitive medium 12 ranges from 75 to 150 µm, then the longitudinal edges 12a of the photosensitive medium 12 are spaced 40 mm or less axially outwardly from the axial ends 48a', 48e' of the roller elements 48a, 48e, so that any distortions of recorded images fall within the tolerable range, and hence images can be recorded highly accurately.

### 5th Embodiment:

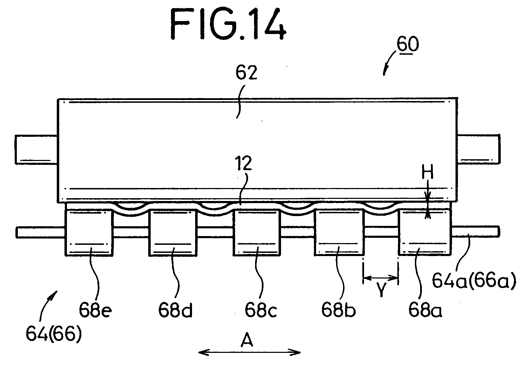

A feeding apparatus according to a fifth embodiment will be described below with reference to FIGS. 14 through 17.

As shown in FIG. 14, the feeding apparatus, generally denoted at 60, comprises a rotary drum 62 rotatable about its own axis, and a pair of transversely spaced nip rollers 64, 66 disposed below and movable toward and away from the rotary drum 62. The rotary drum 62 and the nip rollers 64, 66 grip and feed the photosensitive medium 12 in the auxiliary scanning direction. The nip rollers 64, 66 can be displaced toward and away from the rotary drum 62 by a displacing means 20 (see FIG. 1).

The nip rollers 64, 66 comprise a plurality of roller elements 68a ∼ 68e individually rotatably mounted on shafts 64a, 66a by respective bearings (not shown), the roller elements 68a ∼ 68e being axially spaced in the direction indicated by the arrow A. Adjacent two of the roller elements 68a ∼ 68e are spaced from each other by a distance Y which is 100 mm or less if the photosensitive medium 12 has a thickness H ranging from 75 to 150 µm.

Because the distance Y between adjacent two of the roller elements 68a ∼ 68e is 100 mm or less if the thickness H of the photosensitive medium 12 is in the range of from 75 to 150 µm, the amount of flexing of the photosensitive medium 12 between the roller elements 68a ∼ 68e is limited, preventing the light beam L from scanning the photosensitive medium 12 along curved or distorted scanning lines.

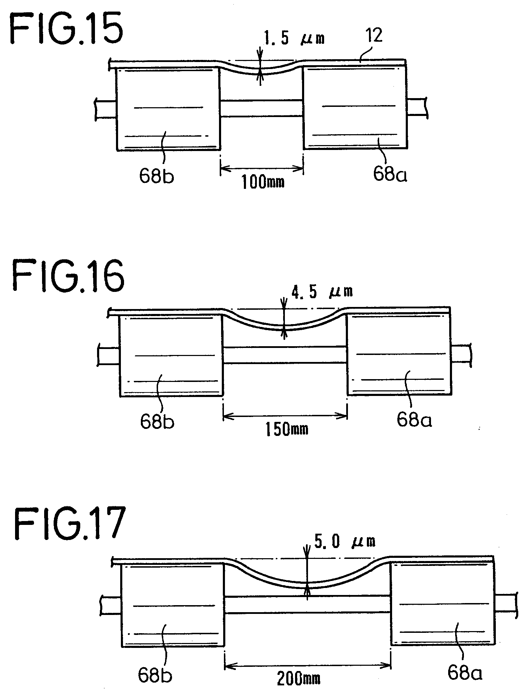

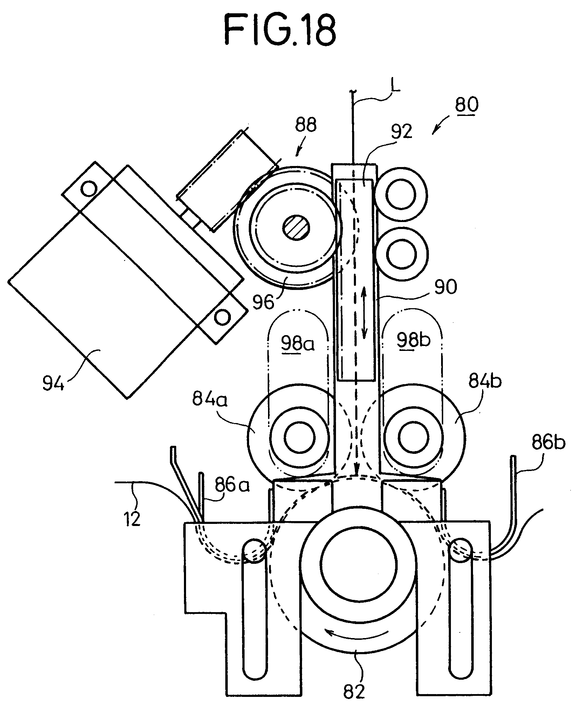

The above numerical limitation of 100 mm or less has been obtained as a consequence of experiments that were conducted to detect any errors in recorded images when a photographic platemaking film having a thickness H ranging from 75 to 150 µm was used as the photosensitive medium 12 and the distance Y was varied. The results of the experiments are shown in FIGS. 15 through 17. When the distance Y was set to 100 mm as shown in FIG. 15, the photosensitive medium 12 flexed 1.5 µm. When the distance Y was set to 150 mm as shown in FIG. 16, the photosensitive medium 12 flexed 4.5 µm. When the distance Y was set to 200 mm as shown in FIG. 17, the photosensitive medium 12 flexed 5.0 µm. The tolerable range of flexing of the photosensitive medium 12 is 2 µm or less, and the distance Y was set to 100 mm or less.

Therefore, if the thickness H of the photosensitive medium 12 is in the range of from 75 to 150 µm, then the distance Y between adjacent two of the roller elements 68a ∼ 68e is set to 100 mm or less for effectively preventing the light beam L from scanning the photosensitive medium 12 along curved or distorted scanning lines.

In the above embodiments, the nip rollers are positioned below and movable toward and away from the rotary drum. However, the present invention is not limited to such a nip roller configuration, but nip rollers may be positioned above a rotary drum as described below.

### 6th Embodiment:

As shown in FIG. 18, a feeding apparatus 80 according to a sixth embodiment comprises a rotary drum 82 rotatable about its own axis, a pair of transversely spaced nip rollers 84a, 84b disposed above and movable toward and away from the rotary drum 82, a pair of presser guides 86a, 86b for pressing a photosensitive medium 12 against an outer circumferential surface of the rotary drum 82, and a displacing mechanism 88 for displacing the nip rollers 84a, 84b toward and away from the rotary drum 82.

The displacing mechanism 88 includes a pair of parallel brackets 90 spaced from each other with respective racks 92 fixed thereto. The racks 92 are operatively coupled to the drive shaft of a stepping motor 94 through a gear train 96. The brackets 90 are in the form of plates having branched lower ends on which the opposite ends of the nip rollers 84a, 84b are placed. The nip rollers 84a, 84b are guided in vertically elongate guide grooves 98a, 98b for vertical movement therealong.

As shown in FIG. 19, the nip rollers 84a, 84b comprise a plurality of roller elements 100a ∼ 100e individually rotatably mounted on shafts by respective bearings (not shown), the roller elements 100a ∼ 100e being axially spaced in the direction indicated by the arrow A. The roller elements 100a, 100e positioned on the opposite ends of the nip rollers 84a, 84b have axial ends 102, 104, respectively, that project, by a distance S, outwardly beyond longitudinal edges 12a of the photosensitive medium 12. The distance S is set to 5 mm at maximum if the photosensitive medium 12 has a thickness H ranging from 75 to 150 µm.

The feeding apparatus 80 operates as follows:
When the brackets 90 are elevated by the stepping motor 94 through the gear train 96, the nip rollers 84a, 84b and the presser guides 86a, 86b are spaced from the rotary drum 82. A leading end of the photosensitive medium 12 is inserted between the rotary drum 82 and the nip rollers 84a, 84b until it reaches a predetermined position. Thereafter, the stepping motor 94 is reversed to displace the nip rollers 84a, 84b toward the rotary drum 82 until the nip rollers 84a, 84b and the rotary drum 82 grip the photosensitive medium 12 therebetween. The presser guides 86a, 86b are also lowered to press the photosensitive medium 12 against the outer circumferential surface of the rotary drum 82.

When the rotary drum 82 is rotated clockwise in the direction indicated by the arrow in FIG. 18, the photosensitive medium 12 is fed in an auxiliary scanning direction across the rotary drum 82 while being gripped between the rotary drum 82 and the nip rollers 84a, 84b. At the same time, a light beam L is applied downwardly to the photosensitive medium 12 through a space between the nip rollers 84a, 84b for two-dimensionally recording image information on the photosensitive medium 12.

In the sixth embodiment, the nip rollers 84a, 84b comprise a plurality of roller elements 100a ∼ 100e, and if the thickness H of the photosensitive medium 12 ranges from 75 to 150 µm, then the longitudinal edges 12a of the photosensitive medium 12 are spaced 5 mm or less axially inwardly from the axial ends 102, 104 of the roller elements 100a, 100e. Therefore, the axial ends 102, 104 of the roller elements 100a, 100e do not directly contact the rotary drum 82, making it possible to feed the photosensitive medium 12 highly accurately.

Although certain preferred embodiments of the present invention have been shown and described in detail, it should be understood that various changes and modifications may be made therein without departing from the scope of the appended claims.

## Claims

1. An apparatus for feeding a scanned medium, comprising:
a rotary drum rotatable about its own axis, said rotary drum being capable of disposing said scanned medium at a precise position where the scanned medium is to be scanned; and
a nip roller disposed below and movable toward and away from said rotary drum, for gripping and feeding the scanned medium in coaction with said rotary drum;
said nip roller comprising a plurality of individually rotatable roller elements spaced in an axial direction of said rotary drum;
said roller elements including roller elements positioned respectively at axially opposite ends of said nip roller and having a diameter smaller than one of said roller elements which is positioned at a center of said nip roller.

2. An apparatus for feeding a scanned medium, comprising:
a rotary drum rotatable about its own axis, said rotary drum being capable of disposing said scanned medium at a precise position where the scanned medium is to be scanned; and
a nip roller disposed below and movable toward and away from said rotary drum, for gripping and feeding the scanned medium in coaction with said rotary drum;
said nip roller comprising:
a bracket movable toward and away from said rotary drum;
a plurality of shafts resiliently supported on said bracket and spaced in an axial direction of said rotary drum; and
a plurality of roller elements individually rotatably mounted on said shafts, respectively.

3. An apparatus for feeding a scanned medium, comprising:
a rotary drum rotatable about its own axis, said rotary drum being capable of disposing said scanned medium at a precise position where the scanned medium is to be scanned; and
a nip roller disposed below and movable toward and away from said rotary drum, for gripping and feeding the scanned medium in coaction with said rotary drum;
said nip roller comprising:
a plurality of individually rotatable roller elements spaced in an axial direction of said rotary drum by a distance of at most 100 mm if the scanned medium has a thickness ranging from 75 to 150 µm.

4. A method of feeding a scanned medium having a thickness ranging from 75 to 150 µm by gripping the scanned medium with a rotary drum rotatable about its own axis, said rotary drum being capable of disposing said scanned medium at a precise position where the scanned medium is to be scanned, and a nip roller movable toward and away from said rotary drum, said method comprising the steps of:
positioning an edge of the scanned medium which extends across the direction in which the scanned medium is fed, within a range of at most 5 mm axially inwardly from an end of the nip roller to keep the end of the nip roller spaced from the rotary drum; and
feeding the scanned medium while the end of the nip roller is being spaced from the rotary drum.

5. A method of feeding a scanned medium having a thickness ranging from 75 to 150 µm by gripping the scanned medium with a rotary drum rotatable about its own axis, said rotary drum being capable of disposing said scanned medium at a precise position where the scanned medium is to be scanned, and a nip roller disposed below and movable toward and away from said rotary drum, said method comprising the steps of:
positioning an edge of the scanned medium which extends across the direction in which the scanned medium is fed, within a range of at most 40 mm axially outwardly from an end of the nip roller to limit downward flexing of the edge of the scanned medium; and
feeding the scanned medium while downward flexing of the edge of the scanned medium is being limited.
